Europäisches Patentamt

European Patent Office

Office européen des brevets

(19)

(11) Numéro de publication : **0 045 677**
**B1**

(12) **FASCICULE DE BREVET EUROPÉEN**

(45) Date de publication du fascicule du brevet : 26.10.83

(21) Numéro de dépôt : 81401157.3

(22) Date de dépôt : 21.07.81

(51) Int. Cl.³ : **H 04 N   3/15, H 01 L 27/14**

(54) **Matrice de détection d'un rayonnement électromagnétique et intensificateur d'images radiologiques comportant une telle matrice.**

(30) Priorité : 25.07.80 FR 8016493

(43) Date de publication de la demande :
10.02.82 Bulletin 82/06

(45) Mention de la délivrance du brevet :
26.10.83 Bulletin 83/43

(84) Etats contractants désignés :
**DE GB NL**

(56) Documents cités :
**EP A 0 028 960**
**GB A 2 030 026**

**RCA REVIEW, vol. 32, juin 1971, New York, US P.K. WEIMER : « Systems and Technologies for Solid-State Image Sensors », pages 251-262**

**INTERNATIONAL CONFERENCE ON CHARGE COUPLED DEVICES, Conference 3. The technology and applications of charge coupled devices » University of Edingburgh 1976 Edingburgh, GB HSIN FU TSENG et al. : « Optimization of a solid state image sensor », pages 75-84**

(73) Titulaire : **THOMSON-CSF**
**173, Boulevard Haussmann**
**F-75379 Paris Cedex 08 (FR)**

(72) Inventeur : **Fraieux, Jean**
**THOMSON-CSF SCPI-173, bld Haussmann**
**F-75360 Paris Cedex 08 (FR)**

(74) Mandataire : **Mayeux, Michèle et al**
**THOMSON-CSF SCPI 173, Bld Haussmann**
**F-75379 Paris Cedex 08 (FR)**

Jouve, 18, rue St-Denis, 75001 Paris, France

# Matrice de détection d'un rayonnement électromagnétique et intensificateur d'images radiologiques comportant une telle matrice

La présente invention concerne une matrice de détection d'un rayonnement électromagnétique à transistors en film mince.

Elle concerne également les intensificateurs d'images radiologiques comportant une telle matrice.

Les matrices de détection d'un rayonnement électromagnétique à transistors en film mince sont généralement constituées d'éléments photosensibles, photodiodes ou photoconductances réalisés en technologie film mince sur un même substrat diélectrique et disposés à chaque point de croisement de lignes et de colonnes perpendiculaires.

Des moyens d'adressage de chaque ligne d'éléments photosensibles sont constitués par un transistor MOS, réalisé en technologie film mince et associé à chaque élément photosensible. Chaque transistor d'adressage reçoit périodiquement sur sa grille une impulsion de déblocage appliquée simultanément à tous les transistors d'adressage d'une même ligne d'éléments photosensibles, et se trouve relié à des moyens de transfert vers un amplificateur vidéo des signaux électriques fournis par chaque ligne d'éléments adressée.

Enfin, des moyens d'amplification du signal électrique fourni par chaque élément photosensible sont associés à chacun de ces éléments et réalisés en technologie film mince.

On donne le nom de module élémentaire à l'ensemble constitué d'un élément photosensible auquel sont associés des moyens d'adressage, d'amplification et divers éléments tels qu'une résistance ou une capacité.

De telles matrices de détection comportent un certain nombre de croisements entre lignes de connexion. Ces croisements constituent une limitation importante du rendement de fabrication de ces dispositifs.

En effet chaque croisement constitue un point fragile dans l'implantation de telles matrices. Il peut y avoir une interruption de la continuité électrique pour la partie de connexion qui franchit la marche de matière isolante destinée à séparer électriquement les deux connexions inférieure et supérieure. Il peut également se produire un court-circuit entre les connexions supérieure et inférieure.

Suivant le type de branchement et l'organisation des lignes et des colonnes, ces défauts peuvent saturer une ligne et une colonne, ou au contraire les invalider.

Une réduction du nombre de croisements entre électrodes apporterait donc une solution aux problèmes évoqués ; c'est ce que se propose de faire la présente invention dans le cas où les éléments photosensibles sont constitués par des photoconductances.

L'invention permet de diminuer de moitié le nombre de croisements par module élémentaire. Elle apporte de plus un gain de la surface utile de détection.

L'objet de la présente invention est une matrice de détection d'un rayonnement électromagnétique comprenant, dans un réseau d'électrodes de lignes et de colonnes, des moyens d'adressage constitués par des transistors MOS ($T_1$) réalisés en technologie film mince, des éléments photosensibles constitués par des photoconductances (e), des moyens d'amplification des signaux électriques fournis par chaque élément photosensible, des moyens de transfert (1) vers un amplificateur vidéo (2) des signaux électriques fournis par chaque ligne d'éléments adressée, chaque transistor MOS recevant périodiquement sur sa grille une impulsion de déblocage appliquée simultanément à tous les transistors d'adressage d'une même ligne, l'une de ses bornes étant reliée aux moyens de transfert et l'autre, à une borne de la photoconductance associée, matrice caractérisée en ce qu'elle comporte en outre des moyens pour appliquer un potentiel fixe à toutes les lignes en permanence et en ce que l'autre borne de ladite photoconductance est reliée à l'électrode de ligne opposée à celle assurant la commande de la grille des transistors d'adressage.

D'autres objets, caractéristiques et résultats de l'invention ressortiront de la description suivante illustrée par les figures annexées qui représentent :

Figure 1 un exemple de matrice de détection d'un rayonnement électromagnétique utilisée dans l'art antérieur.

Figure 2 une matrice de détection d'un rayonnement électromagnétique selon l'invention.

Sur les différentes figures, les mêmes repères désignent les mêmes éléments mais, pour des raisons de clarté, les cotes et proportions des différents éléments n'ont pas été respectées.

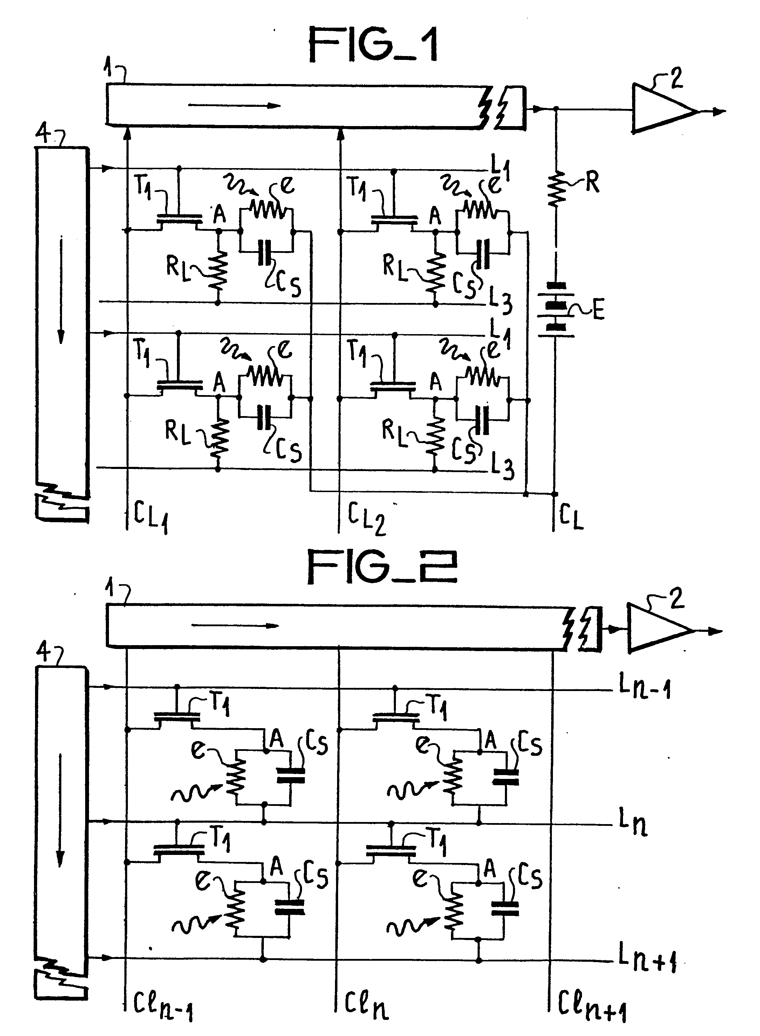

La figure 1 représente une matrice de détection d'un rayonnement électromagnétique utilisée dans l'art antérieur (EP-A-0 028 960).

Par souci de simplification, on n'a représenté que quatre modules élémentaires.

La matrice de détection d'un rayonnement électromagnétique représentée sur la figure 1 comporte un élément photosensible e à chaque point de croisement de lignes et de colonnes perpendiculaires entre elles. Ces éléments photosensibles sont réalisés en technologie film mince par évaporation sur un même substrat diélectrique.

Il s'agit dans cet exemple de photoconductances. Les éléments photosensibles peuvent aussi être constitués de photodiodes.

Des moyens assurent l'adressage d'une ligne d'éléments photosensibles à la fois. Ces moyens sont constitués par des transistors MOS en séléniure de cadmium CdSe par exemple, réalisés en technologie film mince, $T_1$, qui sont associés à chaque élément photosensible e. Chaque transistor $T_1$ reçoit périodiquement sur sa grille une

impulsion de déblocage $L_1$ qui est appliquée simultanément à tous les transistors d'adressage d'une même ligne. L'impulsion de déblocage $L_1$ est obtenue, de façon connue, par un registre 4 qui véhicule une impulsion de déblocage, ou par un multiplexeur.

Les transistors d'adressage $T_1$ relatifs à une même colonne d'éléments photosensibles sont reliés par une même colonne $Cl_1$, $Cl_2$, $Cl_n$ à des moyens de transfert 1 connectés à un amplificateur vidéo 2.

Chaque ligne d'éléments photosensibles adressée c'est-à-dire chaque ligne d'éléments photosensibles dont les transistors d'adressage $T_1$ sont rendus conducteurs, envoie donc des signaux électriques représentatifs du rayonnement reçu par chaque élément photosensible, en parallèle, vers les moyens de transfert 1 reliés à l'amplificateur vidéo 2. Les modules élémentaires sont connectés entre l'une des colonnes $Cl_1$, $Cl_2$ ... $Cl_n$ et une colonne commune $C_L$ reliée au point commun aux moyens de transfert 1 et à l'amplificateur vidéo 2 : cette colonne $C_L$ comporte une source de tension E en série avec une résistance R.

Enfin, une résistance $R_L$ est reliée entre le point A, et un potentiel de référence $L_3$, véhiculé par une ligne horizontale à toutes les résistances d'une même ligne.

Pour un potentiel $L_3$ donné, la valeur de la résistance $R_L$ est ajustée d'une photoconductance à l'autre de façon que le même courant d'obscurité circule dans les photoconductances lorsqu'elles ne reçoivent pas de rayonnement.

Le déblocage de $T_1$ par l'impulsion de commande $L_1$ provoque le passage dans chaque colonne $Cl_1$, $Cl_2$, ... $Cl_n$ d'un courant de lecture dont la valeur dépend de la charge de Cs et donc du rayonnement reçu par la photoconductance e.

Le potentiel de référence $L_3$ est généralement constitué par la borne positive de la source de tension E. Il est possible d'éviter la réalisation matérielle de la ligne $L_3$ qui connecte les résistances $R_L$ à la borne positive de E. Il suffit pour cela d'utiliser comme potentiel de référence la tension véhiculée par la ligne $L_1$ de la ligne de modules élémentaires suivante.

Il est donc possible de n'utiliser qu'une seule ligne horizontale véhiculant les tensions ou signaux de commande à tous les modules élémentaires d'une même ligne d'éléments photosensibles.

La figure 2 représente une matrice de détection d'un rayonnement électromagnétique selon l'invention.

La matrice de détection selon l'invention est constituée d'un réseau d'électrodes de ligne $L_n$ et d'électrodes de colonnes $Cl_n$ définissant des modules élémentaires.

On n'a représenté que quatre modules élémentaires sur la figure.

Un module élémentaire est constitué d'un transistor MOS d'adressage $T_1$, d'une photoconductance e en parallèle sur une capacité de stockage $C_s$. Ces éléments sont les mêmes que ceux décrits dans la figure 1 ; c'est pourquoi nous n'avons pas jugé nécessaire d'en détailler le fonctionnement. La disposition du module élémentaire de l'invention est remarquable par le fait que la photoconductance e est connectée entre le point A, drain du transistor d'adressage $T_1$ et l'électrode de ligne $L_n$ opposée à celle $L_{n-1}$ assurant la commande de la grille du transistor $T_1$.

On admet dans le fonctionnement qu'une couche photo-conductrice sans défaut peut être réalisée par une amélioration de la technologie actuelle. La ligne inférieure $L_n$ peut dans ces conditions être utilisée comme référence de potentiel pour le circuit de détection.

Cette valeur de référence n'est perturbée que ligne par ligne, une fois par trame. Au moment où une impulsion de déblocage est appliquée à une ligne de modules, les transistors de toute cette ligne sont rendus passants, sans que le potentiel de la ligne d'en dessous s'en trouve perturbé.

De même cette impulsion de potentiel ne perturbe pas le fonctionnement de la ligne supérieure dont les transistors sont bloqués.

Par rapport au fonctionnement de la matrice de détection décrite en figure 1, le sens de polarisation des transistors d'adressage n'est plus libre.

Dans le premier cas la colonne pouvait être indifféremment positive ou négative. Dans le cas de l'invention, la colonne doit être positive. Si ce n'était pas le cas, la ligne de référence de chacun des transistors de la matrice, positive, les maintiendrait tous dans l'état passant, pendant la durée de la trame. Cette disposition a l'avantage de supprimer le réseau de colonnes de référence $C_L$ et par là même de diminuer de moitié le nombre de croisements entre électrodes, par module élémentaire. Cette nouvelle implantation présente l'avantage incontestable d'augmenter le rendement de fabrication du système.

En effet, les croisements entre électrodes représentent des point fragiles du dispositif et peuvent donner lieu à toutes sortes d'imperfections gênant le fonctionnement du système. Une réduction de deux du nombre de ces croisements porte donc une promesse d'augmentation sérieuse du rendement de fabrication.

Du fait du perfectionnement apporté par l'invention, une plus grande fraction de la surface d'un point de détection peut être consacrée à l'aire sensible.

On peut évaluer ce gain en adoptant, à titre d'exemple non limitatif, les caractéristiques géométriques suivantes pour un module élémentaire.

— dimension d'un point de détection $(400\ \mu m)^2$
　　— dimension d'un transistor $(100\ \mu m)^2$
　　— largeur d'une ligne $40\ \mu m$
　　— interligne $40\ \mu m$.

La surface utile de détection pour un module élémentaire de l'art antérieur est d'environ $4,1 \cdot 10^4\ \mu m^2$.

La surface utile de détection pour un module élémentaire selon l'invention est d'environ $6,8 \cdot 10^4\ \mu m^2$.

Le gain absolu est donc de $2{,}7 \cdot 10^4 \, \mu m^2$, le gain relatif de 66 %, ce qui met nettement en évidence le grand intérêt du perfectionnement apporté par l'invention.

La matrice de détection selon l'invention est utilisée dans les intensificateurs d'images radiologiques où elle assure soit la conversion des photons X incidents en signal électrique de lecture, soit seulement la détection d'un rayonnement visible dans le cas où les photons X incidents sont convertis en photons de moindre énergie par un scintillateur.

La scintillateur est alors constitué par un panneau mis en contact avec la mosaïque détectrice.

## Revendications

1. Matrice de détection d'un rayonnement électromagnétique comprenant, dans un réseau d'électrodes de lignes et de colonnes, des moyens d'adressage constitués par des transistors MOS ($T_1$) réalisés en technologie film mince, des éléments photosensibles constitués par des photoconductances (e), des moyens d'amplification du signal électrique fourni par chaque élément photosensible, des moyens de transfert (1) vers un amplificateur vidéo (2) des signaux électriques fournis par chaque ligne d'éléments adressée, chaque transistor MOS ($T_1$) recevant périodiquement sur sa grille une impulsion de déblocage appliquée simultanément à tous les transistors d'adressage d'une même ligne, l'une de ses bornes étant reliée aux moyens de transfert, et l'autre à une borne (A) de la photoconductance (e) associée, matrice caractérisée en ce qu'elle comporte en outre des moyens pour appliquer un potentiel fixe à toutes les lignes en permanence et en ce que l'autre borne de ladite photoconductance (e) est reliée à l'électrode de ligne opposée à celle assurant la commande de la grille des transistors d'adressage.

2. Matrice de détection selon la revendication 1, caractérisée en ce que les transistors d'adressage ($T_1$) sont rendus conducteurs par des impulsions positives et en ce que ces impulsions sont véhiculées sur une même ligne, pour chaque ligne de modules élémentaires.

3. Matrice de détection selon la revendication 1, caractérisée en ce que les moyens d'amplification sont constitués par une capacité de stockage (Cs) qui est montée en parallèle sur chaque photo-conductance (e).

4. Intensificateur d'images radiologiques, caractérisé en ce qu'il comporte une matrice de détection d'un rayonnement électromagnétique selon l'une des revendications précédentes.

## Claims

1. Electromagnetic radiation detection matrix comprising, within a pattern of line and column electrodes, addressing means formed of MOS transistors ($T_1$) embodied in thin-film technology, photosensitive members formed of photo-conductance members (e), amplification means for amplifying the electrical signal provided by each of the photosensitive members, transfer means (1) for transferring electrical signals provided by each line of addressed members towards a video amplifier (2), each MOS transistor ($T_1$) periodically receiving on its gate an enabling pulse simultaneously applied to all of the addressing transistors of the same line, one of its terminals being connected to the transfer means and the other to a terminal (A) of the associated photo-conductance member (e), the matrix being characterized in that it further comprises means for permanently applying a fixed potential to all of the lines, and in that the other terminal of said photo-conductance member (e) is connected to the line electrode opposed to that assuring the control of the gates of the addressing transistors.

2. Detection matrix in accordance with claim 1, characterized in that the addressing transistors ($T_1$) are rendered conductive by positive pulses and in that these pulses are transferred on the same line for each line of elementary modules.

3. Detection matrix in accordance with claim 1, characterized in that the amplication means are formed of a storage capacity (Cs) mounted in parallel to each photo-conductance member (e).

4. Radiologic image amplifier, characterized in that it comprises an electromagnetic radiation detection matrix in accordance with any of the preceding claims.

## Ansprüche

1. Detektormatrix zur Erfassung einer elektromagnetischen Strahlung, mit in einem Elektrodennetz aus Zeilen und Spalten enthaltenen Adressiermitteln, die durch MOS-Transistoren ($T_1$) gebildet sind, welche in Dünnfilmtechnik verwirklicht sind, photoempfindlichen Elementen, die durch photoleitende Elemente (e) gebildet sind, Verstärkermitteln zum Verstärken des elektrischen Signals, das von jedem photoempfindlichen Element abgegeben wird, Überführungsmitteln (1) zur Überführung der von jeder adressierten Elementzeile abgegebenen elektrischen Signale zu einem Videoverstärker (2), wobei jeder MOS-Transistor ($T_1$) periodisch an seinem Gate einen Freigabeimpuls empfängt, der gleichzeitig an alle Transistoren zur Adressierung derselben Zeile angelegt wird, wobei einer seiner Anschlüsse mit den Überführungsmitteln verbunden ist und der andere mit einem Anschluß (A) des zugeordneten photoempfindlichen Elementes (e) verbunden ist, wobei diese Matrix dadurch gekennzeichnet ist, daß sie ferner Mittel umfaßt, um ein festes Potential dauernd an alle Zeilen anzulegen, und daß der andere Anschluß des genannten photoleitenden Elementes (e) mit der Zeilenelektrode verbunden ist, die derjenigen gegenüberliegt, welche die Ansteuerung des Gates der Adressiertransistoren gewährleistet.

2. Detektormatrix nach Anspruch 1, dadurch gekennzeichnet, daß die Adressiertransistoren

(T₁) durch positive Impulse leitend gemacht werden und daß diese Impulse für jede Zeile von Elementarmoduln über dieselbe Leitung geführt werden.

3. Detektormatrix nach Anspruch 1, dadurch gekennzeichnet, daß die Verstärkermittel durch eine Speicherkapazität (Cs) gebildet sind, die parallel zu jedem photoleitenden Element (e) geschaltet ist.

4. Radiologischer Bildverstärker, dadurch gekennzeichnet, daß er eine Detektormatrix zur Erfassung von elektromagnetischer Strahlung gemäß einem der vorstehenden Ansprüche umfaßt.

# FIG_1

# FIG_2